# EUROPEAN PATENT SPECIFICATION

(11) **EP 1 539 586 B1**
(45) Date of publication and mention of the grant of the patent: **30.05.2012**
(21) Application number: 03795176.1
(22) Date of filing: 10.09.2003
(51) Int. Cl.: B65B 51/18

(54) **A SEALING APPARATUS FOR SEALING WRAPPERS CONTAINING SETS OF CYLINDRICAL PRODUCTS ARRANGED IN BUNDLES**
VERSIEGELUNGSVORRICHTUNG ZUR VERSIEGELUNG VON HÜLLEN MIT GRUPPEN IN BÜNDELN ANGEORDNETER ZYLINDRISCHER PRODUKTE
APPAREIL DE SCELLEMENT POUR SCELLER DES ENVELOPPES CONTENANT DES ENSEMBLES DE PRODUITS CYLINDRIQUES DISPOSES EN LOTS

(30) Priority: 13.09.2002 IT BO20020580
(43) Date of publication of application: 15.06.2005
(73) Proprietor: T.M.C. S.P.A., 40057 Cadriano Di Granarolo Emilia, Bologna (IT)
(72) Inventor: GASPERINI, Tiziano, 40122 Bologna (IT); CUSSINI, Massimo, 40017 San Giovanni In Persiceto (BO) (IT); ZAMBONINI, Andrea, 40051 Altedo (IT)
(74) Representative: Pederzini, Paolo
(86) International application number: PCT/IB2003/004061
(87) International publication number: WO 2004/024565

(56) References cited:
- EP-A- 0 553 635
- GB-A- 827 995
- US-A- 1 887 699

## Description

### Technical Field

The present invention relates to the automated packaging of products, in particular cylindrical products such as rolls of toilet and/or kitchen paper, and relates to an apparatus for sealing product wrappers made from a sheet of wrapping material which are wrapped and folded over the products and closed by heat-sealing.

### Background Art

In the above-mentioned paper roll packaging, use is known of automatic machines which form bundles of products, creating them according to various commercial formats by grouping and wrapping them together with sheets taken from plastic films, normally made of polythene.

The wrapper which contains the products is formed by wrapping it around the products and creating folded flaps which overlap other parts of the sheet.

Sealing apparatuses heat the wrapping sheet flaps, in precisely local areas, bringing the material of which they are made to a temperature which softens it. Subsequent mechanical compression of said areas, maintained for a certain time and followed by cooling, results in the flaps permanently adhering and the wrapper remaining closed and tightly holding the products.

A sealing apparatus of the known type, operating in accordance with the above-mentioned technology, basically comprises: a table for supporting the products; a pair of continuous conveyors, on either side of the supporting table; a set of heat exchange means and a set of means for pressing the wrapper. See GB 827995.

The product supporting table is horizontal and supports the cylindrical rolls resting on their base, that is to say, it supports the rolls with their tubular cores vertical.

Each continuous conveyor has at least two rollers with a vertical axis, and endless belts looped around the rollers. The endless belts of the two conveyors have active branches, facing opposite side surfaces of the products, and are positioned so that they react against one another, firmly clamping the products between them. Only one of the rollers of each conveyor is motor-driven. Thanks to this motor-driven feature, the belts, tight around the pair of rollers, transmit to the products the thrust needed to make them move forwards over the supporting table.

The heat exchange means and the pressing means consist of endless belt contact elements, positioned inside the looped length and behind the active branches. Therefore, like the feed thrust, the heat exchange action of the former means and the mechanical action of the latter means are exerted on the products through the active branches of the endless belts.

The sealing apparatus also has sprung tensioning means in the form of endless belt tensioners, connected to the inactive branches and positioned in a single limited area of the latter.

For packaging rolls of paper positioned on the supporting table with their cores at a right angle to the table, apparatuses of this known type have a significant disadvantage because the seals which join the flaps of the wrapper created are not continuous along its length. They are only continuous in the zones in which there is direct contact between the active branches of the belts and the products reacting against them.

The film flaps contact surface in which sealing can occur correctly is defined only by the sum of the basic contact surfaces in which two rigid vertical surfaces are at a tangent to the opposite, deformable cylindrical surfaces of the rolls of soft material between them.

The rigid vertical surfaces are each defined by the plane in which the active branch of the belts lies, which is practically non-deformable in terms of inability to perform translating movements perpendicular to itself and towards the products. The active branch of the belts, as well as being pulled tight at a tangent to the rollers, has, at the back - inside the looped length of belt to which it belongs - bars for exchanging heat with the film and bars for mechanical compression of the products. Despite the fact that these bars are elastically yielding, their capacity for movement has a top limit in the elastic deflection of the active branch, a deflection which is evidently reduced proportionally to increases in the traction exercised on the belt to tighten it on the rollers.

As regards the side surfaces of the rolls, there is nothing to add to what was indicated above, it being understood that the give of the material of which the rolls are made can be used to advantage in order to squeeze them to a degree suitable to increase their surface for contact with the rigid surfaces defined above and, therefore, as far as possible to extend the size of the basic sealing areas.

Despite the positive contribution of the latter device, packs obtained with the prior art have breaks in the sealing zones responsible for both functional and aesthetic disadvantages. Breaks in the seals involve the presence of possible means of access into the pack for dust, various polluting agents and/or insects which may compromise the hygiene of the products inside. Breaks in the seals also involve a certain pack outer irregularity which is not attractive to more discerning purchasers of these products.

### Disclosure of the Invention

The aim of the present invention is to overcome these disadvantages - which have existed in the sector for some time now - by guaranteeing the production of continuous seals even on zones of the wrapper in which the cylindrical shape of the rolls inside prevents the rolls from exerting on the wall of the wrapper a suitable reaction to the sealing pressure.

This result is achieved by an apparatus able to increase - all other conditions being equal to the prior art - the extent of the flap contact zones surface where there is contact with the products inside the pack; and able to exert on the wrapper a pinch effect which holds the film taut locally between one product and another so that it can develop a reactive capacity suitable for creating the local contact necessary to guarantee correct overlapping flap sealing, even in the absence of contact with the material of which the products are made.

Accordingly, the present invention achieves this aim with a sealing apparatus for sealing wrappers containing sets of cylindrical products arranged in bundles, comprising:
- a horizontal supporting table, supporting the products resting on their base;
- a pair of continuous conveyors with rollers having a vertical axis, and endless belts looped around the rollers. The endless belts have active branches, facing opposite side surfaces of the products, and are positioned so that they react against one another, firmly clamping the products between them, causing the products to be fed forwards along the supporting table;
- a set of heat exchange means and a set of means for pressing the wrapper;
- sprung means for tensioning the endless belts; characterised in that at least one of the conveyors has both rollers motor-driven, and has the sprung tensioning means connected to the active branch of the relative endless belt, so that it is sprung at least in the direction transversal to the plane in which it lies and allowing the active branch to configure itself automatically and so as to match the outline of the products opposite it;
the set of heat exchange means and the set of pressing means comprising endless belt contact elements, positioned in a predetermined alternated way inside the looped length and behind the active branches.

Therefore, the present invention allows the conveyor belt branches to be given their own geometrically undulating and sprung configuration, designed to locally envelope, around the rolls, the cylindrical side surface of the rolls and to also allow sealing at the spaces in the pack between one roll and another.

### Brief Description of the Drawings

The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which:
Figure 1 is a schematic perspective assembly view of a sealing apparatus made in accordance with the present invention;

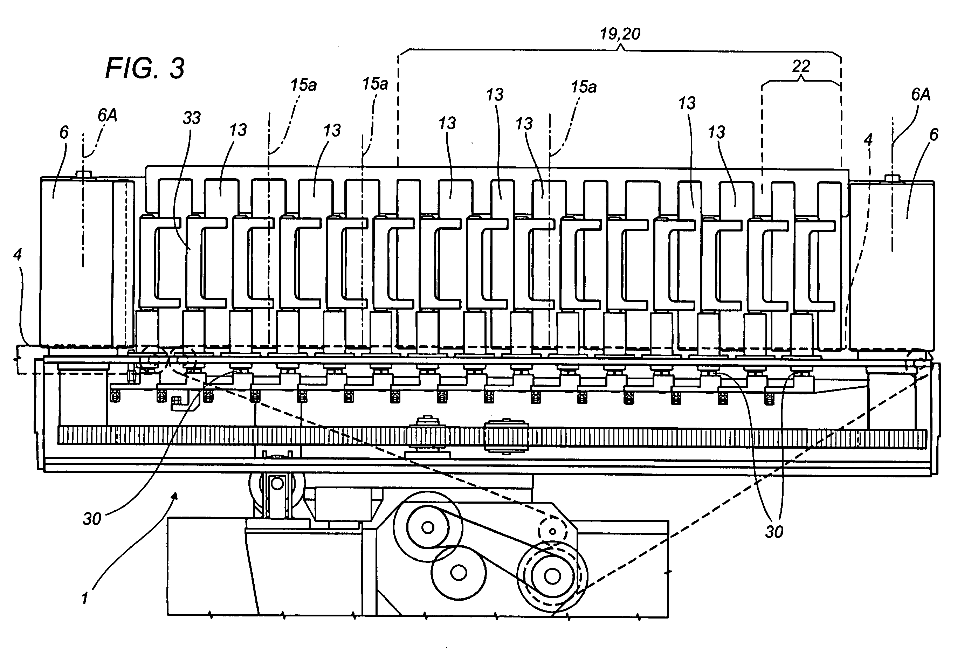

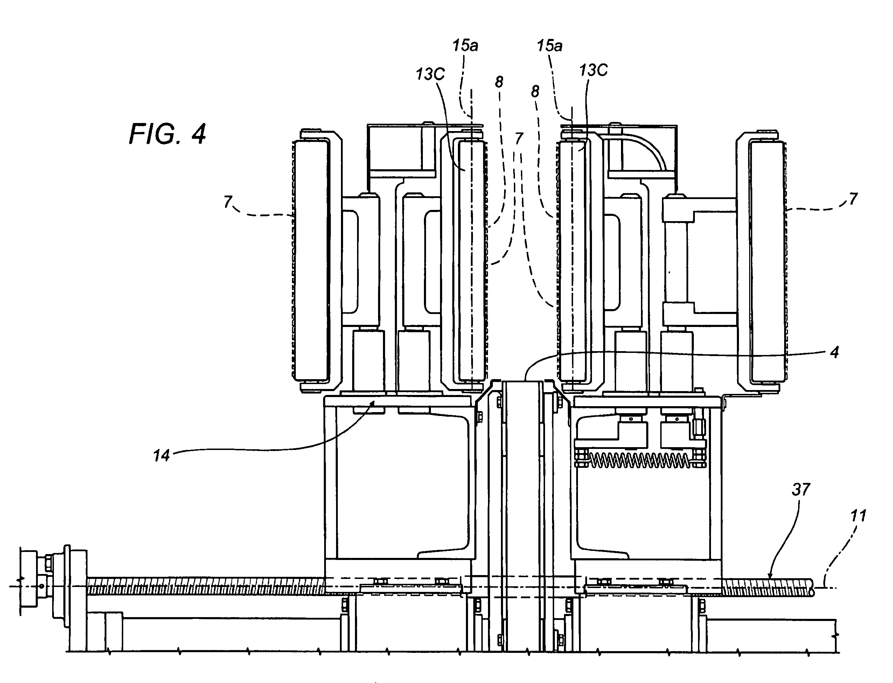

Figures 2, 3 and 4 are respectively a top plan view, an elevation view and a side view of the apparatus illustrated in Figure 1;
Figure 5 is an enlarged detail of the view illustrated in Figure 2;

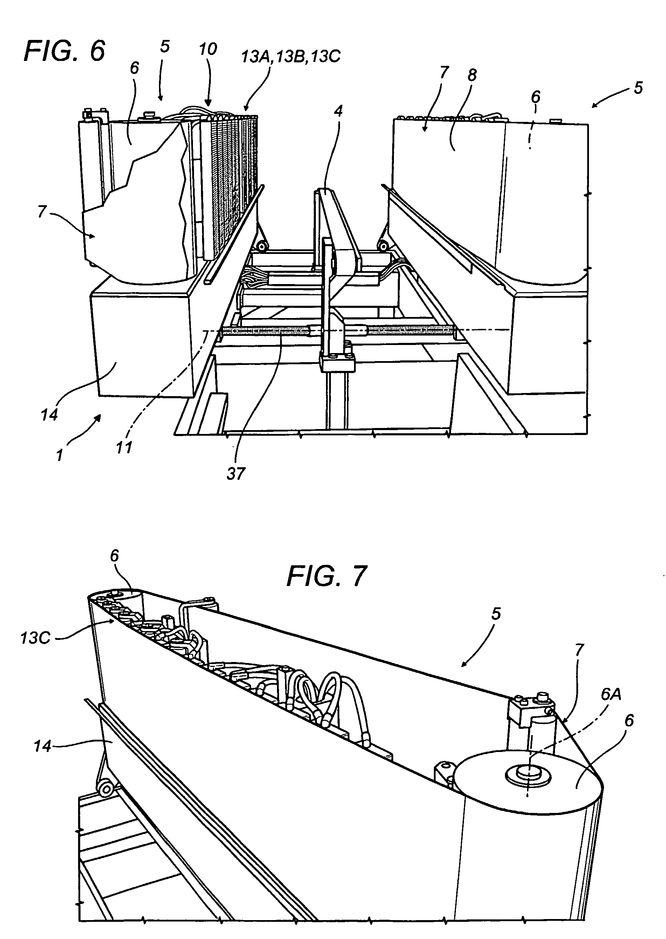

Figure 6 is a perspective assembly view of the apparatus with some parts cut away to better illustrate others;
Figures 7 and 8 are enlarged perspective views of several details illustrated in Figure 6;
Figures 9, 10 and 11 are enlarged perspective views of several details of mechanism with which the apparatus is equipped, also visible in Figure 5;
Figure 12 is a schematic partial top plan view of a sealing pattern by the apparatus.

### Detailed Description of the Preferred Embodiments of the Invention

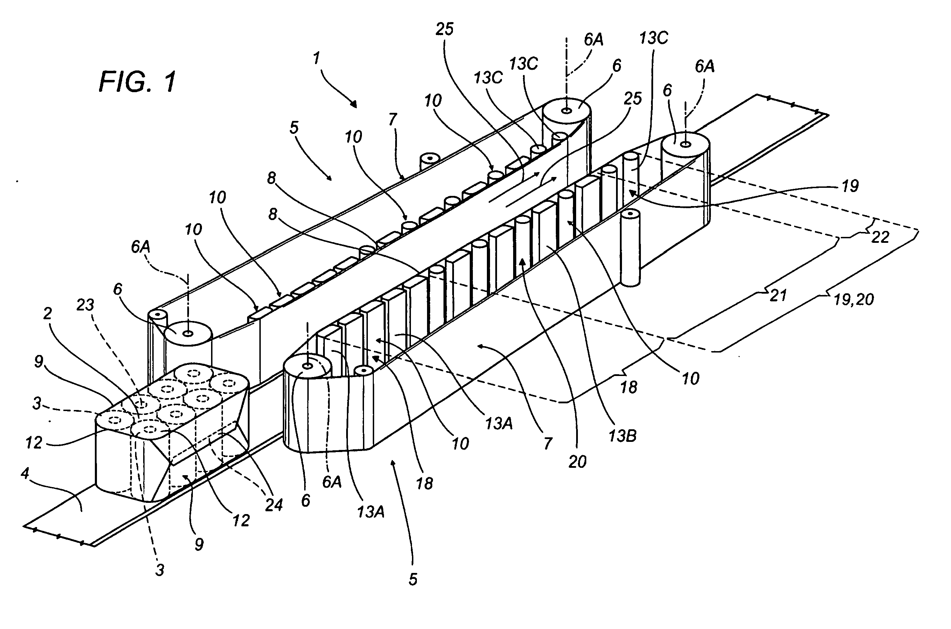

With reference to Figure 1 of the accompanying drawings, the numeral 1 indicates a sealing apparatus as a whole, for sealing wrappers 2 containing sets of cylindrical products 3 arranged in bundles, preferably, but without limiting the application of the present invention, rolls of soft paper for use as toilet paper or kitchen towels, having tubular cores 23.

The apparatus basically comprises: a supporting table 4 for the products; a pair of looped continuous conveyors 5; a set of heat exchange means 13A, 13B and a set of means 13C for pressing the wrapper 2.

The horizontal supporting table 4 is designed to support the products 3 resting on their base, that is to say, angled so that their cores 23 are vertical. These products 3 are grouped in suitable packaging formats and are wrapped together in a sheet of wrapping material taken from a film of plastic material, preferably polythene. The sheet, once created in the required size, is folded over itself in contact with the products 3, forming, in the known way, a wrapper 2 with closing flaps 24 folded over and overlapping one another.

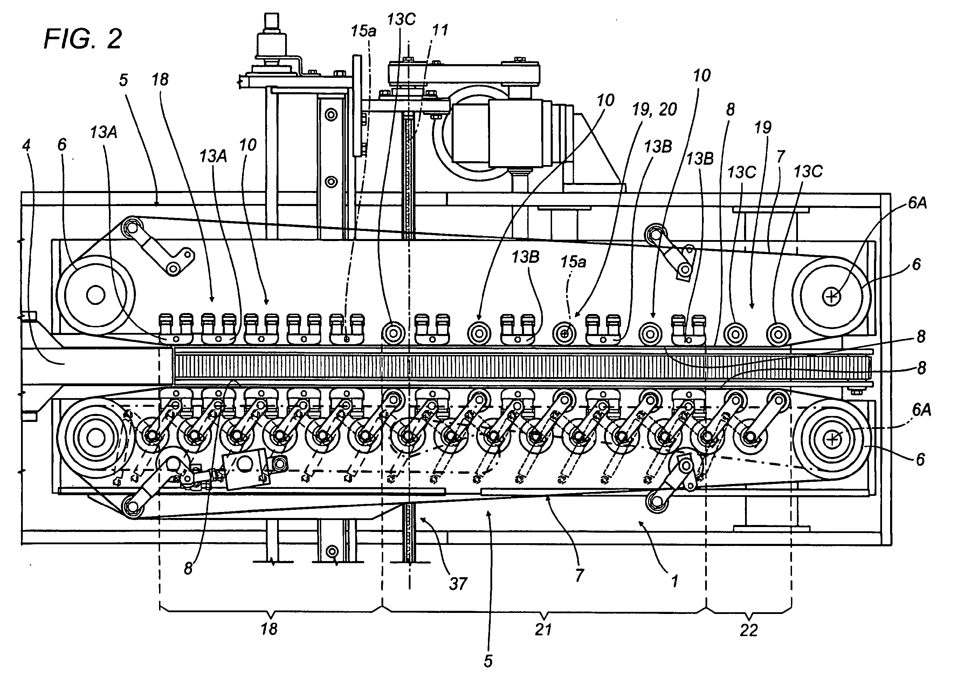

The continuous conveyors 5 each have a pair of cylindrical rollers 6 with vertical axis 6A, and endless belts 7 looped around the rollers 6. The endless belts 7 have active branches 8, facing opposite side surfaces 9 of the products 3, and are designed to react against one another with opposing thrust, transversal to the branches 8, so as to firmly clamp the products 3 between them, causing them to be fed forwards along the supporting table 4 after a synchronised and concordant sliding movement by the belts 7, indicated by the arrow 25. With particular reference to Figure 2, it may be seen how the opposing thrust can be obtained by activating separate carriages, moving on relative guides, in a direction 11 transversal to the plane in which the active branches 8 of the belts lie, and driven by screw drive means 37.

Each of the conveyor belts 5 has its own rollers 6, both motor-driven. It also has sprung tensioning means, connected to the active branch 8 of its endless belt 7, distributed along it and designed to make it sprung parallel with the direction 11 transversal to the active branch 8, as described more clearly below.

Connected to each endless belt 7 and located inside its looped length, the apparatus 1 has endless belt 7 contact elements - generically labelled 10 - positioned behind the active branches 8. These contact elements 10 consist, in particular, of a set of elongated bars whose shapes vary according to the specific function they must perform. A first set of bars, labelled 13A and 13B, forms heat exchange means suitable for interacting with the endless belts 7. A second set of bars 13C forms pressing means designed to apply mechanical pressure on the belts 7.

The number and alternation of the sets 13A, 13B and 13C are illustrated by way of example in the accompanying drawings and may vary according to the type of format to be sealed, its dimensions, etc., without in any way limiting the scope of the inventive concept.

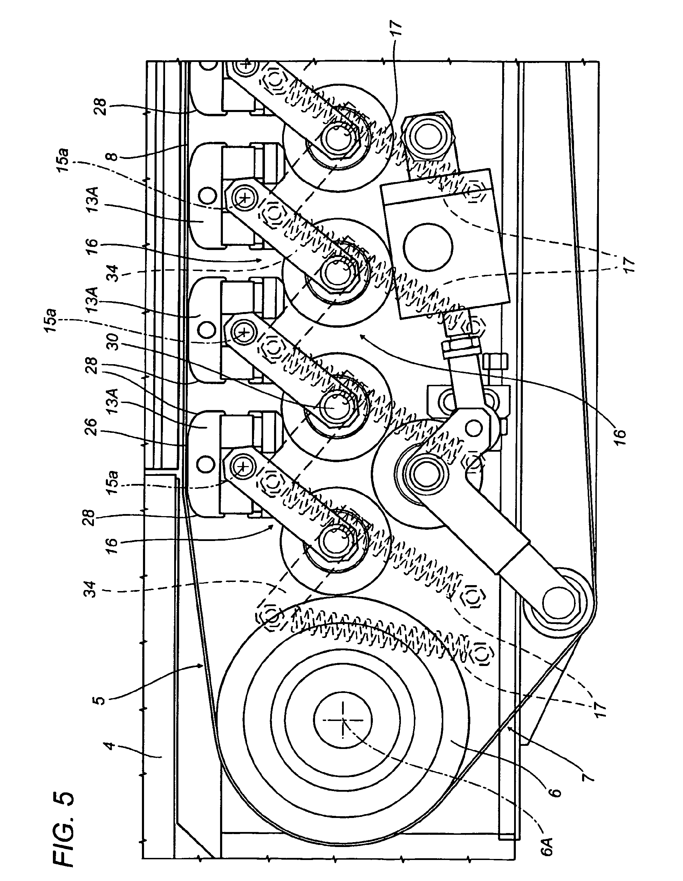

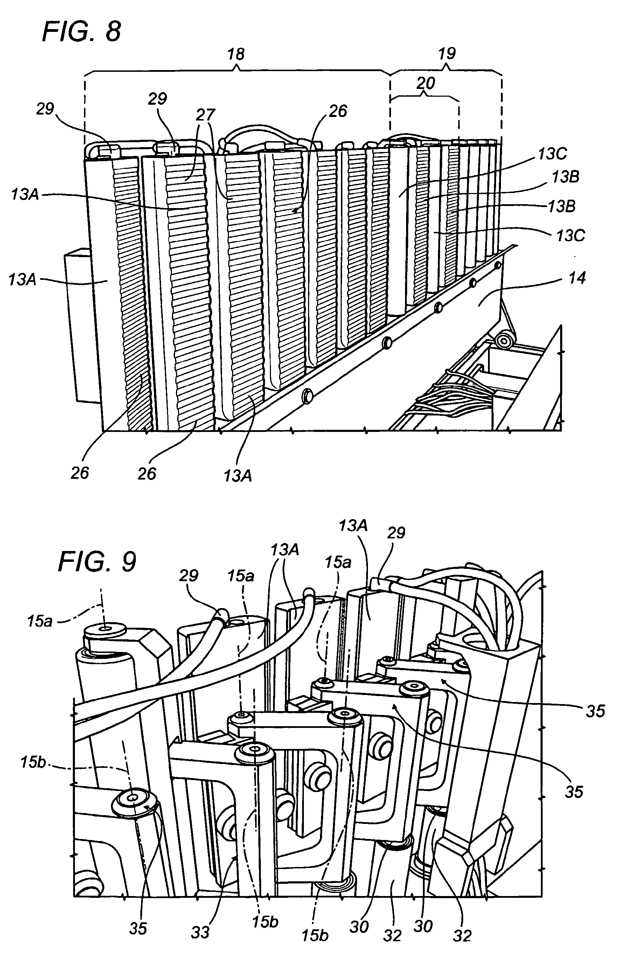

Figures 1 and 5 and, more specifically, Figure 8, which illustrate one of the conveyors 5 without its endless belt 7, show how the bars 13A for heating the belts 7 have the shape of elongated substantially parallelepiped elements, vertical and parallel with the axes of rotation 6A of the rollers 6.

A flat face 26 of these elements with parallel projections 27, or horizontal finning, as well as rounded edges 28, faces the active branch 8 of the belt 7 with which it is in direct contact. Electric heating elements 29, housed in the body of the parallelepiped elements, allow the bars 13A to be heated and the heat to be transmitted, by means of the belt 7, to the wrapper 2 of the packs between the belts 7 and passing together with them in front of the bars 13A positioned one after another.

The structure of the cooling bars 13B is identical. The only difference is the presence of internal cooling circuits in place of the electric heating elements. These circuits allows the bars 13B to be cooled in order to carry heat away from the belts 7, allowing the wrapper 2 seals to cool and strengthen once formed.

In contrast, the bars 13C, designed to apply mechanical pressure to the wrapper 2 flaps 24 locally softened after passing in front of the heating bars 13A, are cylindrical.

Irrespective of the shape, peculiar to the different function performed, all of the bars 13A, 13B and 13C - that is to say, all of the contact elements 10 on the active branches 8 of the belts 7 - are mounted on a fixed supporting structure 14 so that they can rotate about a first, longitudinal axis of rotation 15a, mobile relative to the fixed structure 14, allowing free oscillation about the axis 15a, and they can rotate about a second axis of rotation 15b, fixed and parallel with the first.

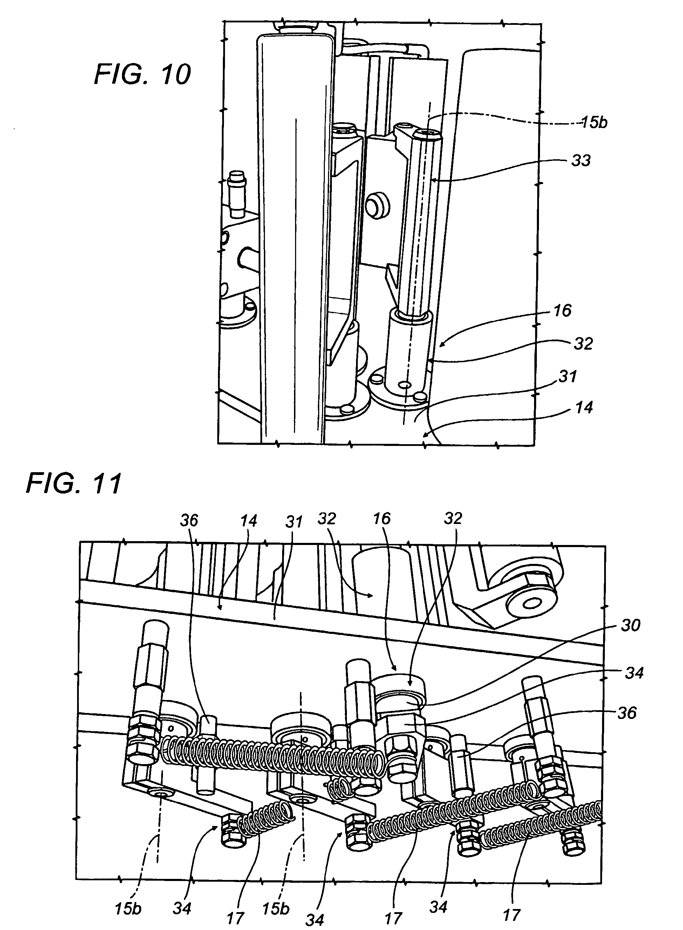

This overall mobility is made possible for the bars 13A, 13B and 13C by suitable supporting means comprising simple, jointed mechanisms 16 illustrated in Figure 5 and more visible in combined observation of Figures 9, 10 and 11.

These mechanisms 16 comprise a vertical shaft 30, connected to a supporting plate 31 by means of a cylindrical turning pair 32, with a pair of cranks 33 and 34 at its opposite ends.

A first crank 33, having the shape of a double arm uses a cylindrical turning connection 35 to support a bar 13A, 13B, 13C. The second crank 34 is connected to an elastically deformable element 17 - a helical spring - and has a fixed side contact 36 alongside it.

The cylindrical turning connections strictly constrain the mechanism 16 to move parallel with the supporting table 4 for the products 3. Conversely, the bars 13 although able to rotate, both freely relative to the first crank 33, and together with the latter and the shaft 30, relative to the supporting structure 14, are constrained to maintain a position strictly at a right angle to the supporting table 4 for the products.

This feature is particularly advantageous for guaranteeing the perfect verticality of the planes in which the active branches 8 of the conveyor belts 7 lie, whatever the format of the packs of products 3 and/or the clamping stress applied to the belts 7, which they in turn discharge to the packs between them. These conditions allow even, continuous sealing of the flaps 24 along the entire height of the pack from the supporting table 4. Therefore, the apparatus 1 allows, on one hand, continuous seals, totally sealing the wrappers 2, and on the other hand, combination of this feature with operating flexibility suitable to allow the development of various product 3 packaging formats.

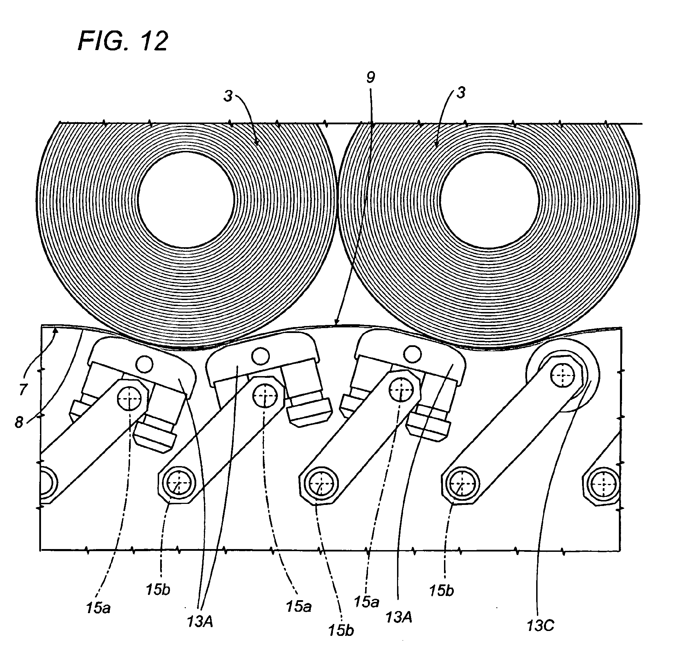

These movement and positioning features are clearly illustrated in Figure 12, which shows how the active branches 8 of the belts 7 adapt to the shape of the pack format with products 3 passing.

It should be noticed that the elastically deformable elements 17 may allow a preferred embodiment of the above-mentioned endless belt 7 tensioning means. These tensioning means are connected to the active branch 8 of the respective endless belt 7 and distributed along the length of the latter, being connected to each of the bars 13A, 13B, 13C with which the apparatus 1 is equipped.

It should also be noticed that the capacity of the bars 13A, 13B and 13C for independent angling about the first axes of rotation 15a together with the mobility of the bars thanks to the mechanisms 16 and the presence of the elastic means 17, allow the apparatus 1 to react automatically to the actions exchanged by the bars 13A, 13B and 13C and the active branches 8 of the conveyor belts 7 as a result of the products 3 passing along the supporting table 4. That is to say, they allow the active branches 8, passing in front of the bars 13A, 13B and 13C to configure themselves locally and automatically in such a way that they match the outline 12 of the products, following the profile precisely and making suitable contact where there is a local point of contact offered internally by the products 3. In contrast, where the products 3 cannot offer a suitable point of contact for the flaps 24, for example in the space delimited by the outlines 12 of two consecutive products 3 and the wall of the wrapper 2, the capacity of the pressing elements 10 to press in the direction 11 transversal to the active branches 8 of the belts 7, directed towards the inside of the packs, is sufficient to apply a pinch effect on the wrapper 2 adequate to provide the point of contact needed to counteract the pressure and guarantee the perfect adhesion of the flaps 24 necessary for continuous heat-sealing.

At this point, it should be noticed that the rounded shape of the edges 28 of the heat exchange bars 13A, 13B and the circular shape of the outline of the pressing bars 13C allow belt 7 wear caused by them scraping against such parts of the apparatus 1 to be contained.

Apparatus 1 operation may be described with reference to Figure 1, which illustrates how the products 3 arriving from the left of the figure, when clamped by the belts 7 of the two conveyors 5, are fed together with the belts 7 through a station 18 which heats the active branches 8 of the belts 7, comprising a plurality of the heating bars 13A, which are independent and consecutive. The flow of heat transmitted to the heating projections 27 is then transferred to the belts 7, which are made of a heat conducting material, and from these to the polythene wrappers 2. The wrappers 2 are softened along parallel longitudinal lines corresponding with the projections 27.

As a result of the belts 17 sliding, the products 3 pass through a pressing station 19, a first part of which is integrated with a cooling station 20, and whose end vice versa becomes completely independent of the cooling station. Figure 2 illustrates how in a first section 21 close to the heating station 18, cylindrical pressing bars 13C alternate neatly with cooling bars 13B. In a second, subsequent section 22, away from the heating station 18 there are only pressing bars 13C.

Therefore, when passing through the first part of this pressing station the flaps 24 of the wrapper 2 previously softened by heat are pressed and are cooled by the cooling bars 13B, strengthening the joins. All of this is repeated cyclically until the end of the pressing station 19 is reached. Here, the presence of only pressing bars 13C completes the strengthening of the sealed joins made.

The invention described is suitable for evident industrial applications. It can be subject to modifications and variations without thereby departing from the scope of the inventive concept. Moreover, all the details of the invention may be substituted by technically equivalent elements.

## Claims

1. A sealing apparatus for sealing wrappers (2) containing sets of cylindrical products (3) arranged in bundles, comprising:
- a horizontal supporting table (4), supporting the products (3) resting on their base;
- a pair of continuous conveyors (5) having rollers (6) with a vertical axis, and endless belts (7) looped around the rollers (6); the endless belts (7) having active branches (8) facing opposite side surfaces (9) of the products (3), and reacting against one another so as to firmly clamp the products (3) between them, feeding the products forwards along the supporting table (4);
- a set of heat exchange means (13A; 13B) and a set of means (13C) for pressing the wrapper (2);
- sprung tensioning means (10, 16, 17) for the endless belts (7); the sealing apparatus being **characterised in that** at least one of the conveyors (5) has both rollers (6) motor-driven, and has the sprung tensioning means connected to the active branch (8) of the relative endless belt (7), so that it is sprung at least in a direction (11) transversal to the plane in which it lies and allowing the active branch (8) to automatically configure itself in such a way that it matches the outline (12) of the products (3) opposite it;
the set of heat exchange means (13A; 13B) and the set of pressing means (13C) comprising endless belt (7) contact elements (10), positioned in a predetermined alternated way inside the looped length and behind the active branches (8).

2. The apparatus according to claim 1, **characterised in that** the tensioning means (10, 16, 17) are distributed along the length of the active branch (8) of the endless belt (7).

3. The apparatus according to claim 1, **characterised in that** the belt (7) contact elements (10) comprise elongated bars (13A; 13B; 13C), substantially parallel with the axes of rotation (6A) of the rollers (6) of the respective conveyors, the bars (13A; 13B; 13C) being rotatably mounted on a fixed supporting structure (14) so that they rotate about an axis of rotation (15A) longitudinal to it, oscillating freely about the axis (15A), the bars (13A; 13B; 13C) automatically angling themselves relative to the products (3), together with the contiguous parts of belt (7) with which they make contact, so as to connect with the products (3), following the profile of the relative outlines (12).

4. The apparatus according to claim 3, **characterised in that** it comprises supporting means (16; 31) for the bars (13A; 13B; 13C) designed to support the bars (13A; 13B; 13C) rigidly at an angle transversal to the supporting table (4) for the products (3), and vice versa to allow them to move parallel with the table (4).

5. The apparatus according to claim 4, **characterised in that** the supporting means comprise simple mechanisms (16) with mobile interlinked and jointed members (30, 33, 34), the mechanisms (16) being connected to a fixed structure (14) of the apparatus (1) and designed to support the bars (13A; 13B; 13C) perpendicular to the plane in which it lies.

6. The apparatus according to claim 5, **characterised in that** the sprung tensioning means comprise the bars (13A; 13B; 13C), the supporting mechanisms (16) and elastically deformable elements (17) connected to the mechanisms (16) and to a fixed structure (14) of the apparatus, so as to react to the actions exchanged by the bars (13A; 13B; 13C) and the active branches (8) of the conveyor belts (7) as a result of the products (3) passing along the supporting table (4).

7. The apparatus according to any of the foregoing claims, **characterised in that** the bars (13A) comprise heating elements designed to exchange with the endless belts (7) of the continuous conveyors (5) a thermal flow designed to suitably soften the material of which the product (3) wrapper (2) passing in front of the bars (13A) is made.

8. The apparatus according to any of the foregoing claims, **characterised in that** the bars (13B) comprise cooling elements designed to exchange with the endless belts (7) of the continuous conveyors (5) a thermal flow designed to solidify the previously softened parts of the material of which the product (3) wrapper (2) passing in front of the bars (13B) is made.

9. The apparatus according to any of the foregoing claims, **characterised in that** the bars (13C) comprise pressing elements designed to exchange with the endless belts (7) of the continuous conveyors (5) mechanical pressures designed to join parts of layers of wrapper (2) which overlap and were previously softened with heat.

10. The apparatus according to any of the foregoing claims, **characterised in that** the bars (13A; 13B) have component parts (26, 27) facing the belts (7) with substantially rounded edges to reduce wear on the belts (7) caused by scraping against said parts of the fixed bars (13).

11. The apparatus according to any of the foregoing claims, **characterised in that** it comprises a station (18) for heating the active branches (8) of the belts (7), comprising a plurality of independent bars (13A) designed to heat the belts (7); and at least one station (19) for pressing the products (3) between the belts (7), next to the heating station (18) and having bars (13C) designed to press the bundles of products (3) positioned between the belts (7).

12. The apparatus according to claim 11, **characterised in that** it comprises a cooling station (20) comprising bars (13B) designed to carry heat away from the belts (7), the cooling station (20) being integrated with the pressing station (19).

13. The apparatus according to claim 12, **characterised in that** the cooling station (20) bars (13B) and the pressing station (19) bars (13) are alternated, along the length of the belts (7), in suitable pre-ordered sequences.

14. The apparatus according to claim 12 or 13, **characterised in that** the cooling station (20) and the pressing station (19) integrated with one another comprise a first section (21) close to the heating station (18) in which the cooling bars (13B) alternate neatly with the pressing bars (13C), a second section (22), away from the heating station (18) in contrast being equipped only with pressing bars (13C).

## Patentansprüche

1. Versiegelungsvorrichtung zur Versiegelung von Hüllen (2) mit Gruppen in Bündeln angeordneter zylindrischer Produkte (3), umfassend:
- einen horizontalen Auflagetisch (4), auf dem die Produkte (3) auf ihrer Basis stehend aufliegen,
- ein Paar Stetigförderer (5), aufweisend Rollen (6) mit einer Vertikalachse sowie Endlosbänder (7), die in einer Schleife um die Rollen (6) verlaufen, wobei die Endlosbänder (7) aktive Schenkel (8) aufweisen, die gegensätzlichen Seitenflächen (9) der Produkte (3) gegenüberliegen und so gegeneinander wirken, dass sie die Produkte (3) fest zwischen sie klemmen, während sie die Produkte den Auflagetisch (4) entlang vorwärts leiten;
- eine Gruppe von Wärmeaustauschmitteln (13A; 13B) und eine Gruppe von Mitteln (13C) zum Pressen der Hülle (2) ;
- gefederte Spannmittel (10, 16, 17) für die Endlosbänder (7), wobei die Versiegelungsvorrichtung **dadurch gekennzeichnet ist, dass** beide Rollen (6) mindestens eines Förderers (5) motorbetrieben sind, und dass die gefederten Spannmittel mit dem aktiven Schenkel (8) des entsprechenden Endlosbandes (7) verbunden sind, sodass es mindestens in eine Richtung (11) abfedert, die transversal zur Ebene ist, in der es liegt und dem aktiven Schenkel (8) gestattet, sich automatisch so zu konfigurieren, dass er mit der Kontur (12) der Produkte (3) gegenüber übereinstimmt; wobei die Gruppe von Wärmeaustauschmitteln (13A, 13B) und die Gruppe von Pressmitteln (13C) Kontaktelemente (10) des Endlosbandes (7) umfasst, die in einer festgelegten, alternierenden Art und Weise innerhalb der Schleifenstrecke und hinter den aktiven Schenkeln (8) positioniert sind.

2. Vorrichtung nach Anspruch 1, **dadurch gekennzeichnet, dass** die Spannmittel (10, 16, 17) die Strecke des aktiven Schenkels (8) des Endlosbandes (7) entlang verlaufen.

3. Vorrichtung nach Anspruch 1, **dadurch gekennzeichnet, dass** die Kontaktelemente (10) des Bands (7) längliche Stäbe (13A; 13B; 13C) umfassen, die im Wesentlichen parallel zu den Rotationsachsen (6A) der Rollen (6) der entsprechenden Förderer sind, wobei die Stäbe (13A; 13B; 13C) rotierbar auf einer fixierten Auflagestruktur (14) montiert sind, sodass sie longitudinal um eine Rotationsachse (15A) rotieren, wobei sie frei um die Achse (15A) oszillieren, wobei sich die Stäbe (13A; 13B; 13C) automatisch selbst relativ zu den Produkten (3), gemeinsam mit den angrenzenden Teilen des Bandes (7), an denen sie anliegen, ausrichten, sodass sie in Verbindung mit den Produkten (3) treten, indem sie dem Profil der relativen Konturen (12) folgen.

4. Vorrichtung nach Anspruch 3, **dadurch gekennzeichnet, dass** sie Mittel (16; 31) zum Aufliegen der Stäbe (13A; 13B; 13C) umfasst, die als starre Auflage für die Stäbe (13A; 13B; 13C) bei einem Winkel konzipiert ist, der transversal zum Auflagetisch (4) der Produkte (3) ist und umgekehrt, damit sie sich parallel zum Tisch (4) bewegen können.

5. Vorrichtung nach Anspruch 4, **dadurch gekennzeichnet, dass** die Auflagemittel Einzelmechanismen (16) mit beweglichen verketteten und gelenkigen Gliedern (30, 33, 34) umfassen, wobei die Mechanismen (16) mit einer fixierten Struktur (14) der Vorrichtung (1) verbunden und dazu konzipiert sind, lotrecht zur Ebene, in der sie liegt, als Auflage für die Stäbe (13A; 13B; 13C) zu dienen.

6. Vorrichtung nach Anspruch 5, **dadurch gekennzeichnet, dass** die gefederten Spannmittel die Stäbe (13A; 13B; 13C), die Aufliegemechanismen (16) und die elastisch verformbaren Elemente (17) umfassen, die mit den Mechanismen (16) und mit einer fixierten Struktur (14) der Vorrichtung verbunden sind, sodass sie auf die zwischen den Stäben (13A; 13B; 13C) und den aktiven Schenkeln (8) der Förderbänder (7) ausgetauschten Wirkungen infolge der Produkte (3), die den Auflagetisch (4) entlanglaufen, reagieren.

7. Vorrichtung nach einem der vorangehenden Ansprüche, **dadurch gekennzeichnet, dass** die Stäbe (13A) Wärmeelemente umfassen, die dazu konzipiert sind, mit den Endlosbändern (7) der Stetigförderer (5) eine thermische Strömung auszutauschen, die dazu konzipiert ist, das Material, aus dem die Hülle (2) des vor den Stäben (13A) entlanglaufenden Produkts (3) ist, geeignet zu erweichen.

8. Vorrichtung nach einem der vorangehenden Ansprüche, **dadurch gekennzeichnet, dass** die Stäbe (13B) Kühlelemente umfassen, die dazu konzipiert sind, mit den Endlosbändern (7) der Stetigförderer (5) eine thermische Strömung auszutauschen, die dazu konzipiert ist, die zuvor erweichten Teile des Materials, aus dem die Hülle (2) des vor den Stäben (13B) entlanglaufenden Produkts (3) ist, zu erhärten.

9. Vorrichtung nach einem der vorangehenden Ansprüche, **dadurch gekennzeichnet, dass** die Stäbe (13C) Presselemente umfassen, die dazu konzipiert sind, mit den Endlosbändern (7) der Stetigförderer (5) einen mechanischen Druck auszutauschen, der dazu konzipiert ist, Teile von Schichten von Hüllen (2) zu verbinden, die sich überlappen und zuvor mit Wärme erweicht wurden.

10. Vorrichtung nach einem der vorangehenden Ansprüche, **dadurch gekennzeichnet, dass** die Stäbe (13A; 13B) Komponententeile (26, 27) gegenüber den Bändern (7) mit im Wesentlichen abgerundeten Ecken aufweisen, um den auf die Bänder (7) wirkenden, durch das Reiben an den Teilen der fixierten Stäbe (13) verursachten Verschleiß zu reduzieren.

11. Vorrichtung nach einem der vorangehenden Ansprüche, **dadurch gekennzeichnet, dass** sie eine Station (18) zum Erwärmen der aktiven Schenkel (8) der Bänder (7) umfasst, umfassend eine Vielzahl unabhängiger Stäbe (13A), die dazu konzipiert sind, die Bänder (7) zu erwärmen; und mindestens eine Station (19) zum Pressen der Produkte (3) zwischen den Bändern (7) neben der Erwärmstation (18) und aufweisend Stäbe (13C), die dazu konzipiert sind, der Bündel der zwischen den Bändern (7) positionierten Produkte (3) zu pressen.

12. Vorrichtung nach Anspruch 11, **dadurch gekennzeichnet, dass** sie eine Kühlstation (20) umfasst, umfassend Stäbe (13B), die dazu konzipiert sind, Wärme von den Bändern (7) abzuführen, wobei die Kühlstation (20) in die Pressstation (19) integriert ist.

13. Vorrichtung nach Anspruch 12, **dadurch gekennzeichnet, dass** die Stäbe (13B) der Kühlstation (20) und die Stäbe (13) der Pressstation (19) die Strecke der Bänder (7) in geeigneten vorgeordneten Sequenzen entlang verlaufen.

14. Vorrichtung nach Anspruch 12 oder 13, **dadurch gekennzeichnet, dass** die ineinander integrierte Kühlstation (20) und Pressstation (19) einen ersten Abschnitt (21) nahe der Erwärmstation (18) umfassen, in dem sich die Kühlstäbe (13B) geordnet mit den Pressstäben (13C) abwechseln, wobei ein zweiter Abschnitt (22), der von der Erwärmstation (18) weiter entfernt ist, hingegen nur mit Pressstäben (13C) ausgestattet ist.

## Revendications

1. Appareil de scellement pour sceller des enveloppes (2) contenant des ensembles de produits cylindriques (3) disposés en lots, comprenant :
- une table de support horizontale (4), pouvant soutenir les produits (3) en appui sur leur base ;
- une paire de tapis transporteurs continus (5) munis de rouleaux (6) à axe vertical, et des courroies sans fin (7) enroulées autour des rouleaux (6) ; les courroies sans fin (7) ayant des sections actives (8) situées à l'opposé des surfaces latérales (9) des produits (3), et réagissant l'une contre l'autre de sorte à serrer fermement les produits (3) entre eux, alimentant les produits en avant le long de la table de support (4) ;
- un ensemble de moyens d'échange thermique (13A ; 13B) et un ensemble de moyens (13C) pour presser l'enveloppe (2) ;
- des moyens de mise en tension à ressort (10, 16, 17) pour les courroies sans fin (7) ; l'appareil de scellement étant **caractérisé en ce que** au moins un des tapis transporteurs (5) dispose de deux rouleaux (6) motorisés et ses moyens de mise en tension à ressort sont reliés à la section active (8) de la courroie sans fin correspondante (7), de sorte qu'elle fasse ressort au moins dans une direction (11) transversale à son plan d'appui et permettant à ladite section active (8) de se configurer automatiquement de sorte à ce qu'elle corresponde au profil (12) des produits (3) situés à l'opposé ; l'ensemble des moyens d'échange thermique (13A ; 13B) et l'ensemble des moyens de pression (13C) comprenant des éléments de contact (10) de la courroie sans fin (7) positionnés dans un sens alterné préétabli à l'intérieur de la longueur enroulée et derrière les sections actives (8).

2. Appareil selon la revendication 1, **caractérisé en ce que** les moyens de mise en tension (10, 16, 17) sont distribués le long de la longueur de la section active (8) de la courroie sans fin (7).

3. Appareil selon la revendication 1, **caractérisé en ce que** les éléments de contact (10) de la courroie (7) comprennent des barres allongées (13A ; 13B ; 13C), substantiellement parallèles aux axes de rotation (6A) des rouleaux (6) des tapis transporteurs correspondants, les barres (13A ; 13B ; 13C) étant montées de façon rotative sur une structure de support fixe (14) de sorte qu'elles tournent autour d'un axe de rotation (15A) placé longitudinalement par rapport à cette dernière, oscillant librement autour de l'axe (15A), les barres (13A ; 13B ; 13C) s'orientant elles-mêmes automatiquement par rapport aux produits (3), avec les parties contiguës de la courroie (7) avec lesquelles elles sont en contact, de telle sorte à se connecter aux produits (3) en suivant le profil des contours correspondants (12).

4. Appareil selon la revendication 3, **caractérisé en ce que** il comprend des moyens de support (16 ; 31) des barres (13A ; 13B ; 13C) conçus pour soutenir rigidement les barres (13A ; 13B ; 13C) à un angle transversal à la table de support (4) des produits (3), et vice versa pour leur permettre de se déplacer parallèlement par rapport à la table (4).

5. Appareil selon la revendication 4, **caractérisé en ce que** les moyens de support comprennent des mécanismes simples (16) composés de membres mobiles imbriqués et articulés (30, 33, 34), les mécanismes (16) étant reliés à une structure fixe (14) de l'appareil (1) et conçus pour soutenir les barres (13A ; 13B ; 13C) perpendiculairement au plan dans lequel il se trouve.

6. Appareil selon la revendication 5, **caractérisé en ce que** les moyens de mise en tension à ressort comprennent les barres (13A ; 13B ; 13C), les mécanismes de support (16) et les éléments déformables élastiquement (17) reliés aux mécanismes (16) et à une structure fixe (14) de l'appareil, de sorte à réagir aux actions échangées par les barres (13A ; 13B ; 13C) et les sections actives (8) des courroies (7) suite au passage des produits (3) le long de la table de support (4).

7. Appareil selon l'une quelconque des revendications précédentes, **caractérisé en ce que** les barres (13A) comprennent des éléments de chauffage conçus pour échanger, avec les courroies sans fin (7) des tapis transporteurs continus (5), un flux thermique conçu pour ramollir de façon adéquate le matériau constituant l'enveloppe (2) du produit (3) passant devant lesdites barres (13A).

8. Appareil selon l'une quelconque des revendications précédentes, **caractérisé en ce que** les barres (13B) comprennent des éléments de refroidissement conçus pour échanger, avec les courroies sans fin (7) des tapis transporteurs continus (5), un flux thermique conçu pour solidifier les parties précédemment ramollies du matériau constituant l'enveloppe (2) du produit (3) passant devant lesdites barres (13B).

9. Appareil selon l'une quelconque des revendications précédentes, **caractérisé en ce que** les barres (13C) comprennent des éléments de pression conçus pour échanger, avec les courroies sans fin (7) des tapis transporteurs continus (5), des pressions mécaniques conçues pour relier les parties des couches d'enveloppe (2) qui se chevauchent et qui étaient précédemment ramollies par la chaleur.

10. Appareil selon l'une quelconque des revendications précédentes, **caractérisé en ce que** les barres (13A ; 13B) disposent des parties de composant (26, 27) faisant face aux courroies (7) aux contours substantiellement arrondis afin de réduire l'usure des courroies (7) causée par les frottements contre lesdites parties des barres fixes (13).

11. Appareil selon l'une quelconque des revendications précédentes, **caractérisé en ce qu'**il comprend un poste (18) de chauffage des sections actives (8) des courroies (7), comprenant une pluralité de barres indépendantes (13A) conçues pour chauffer les courroies (7) et au moins un poste (19) de pressage des produits (3) entre lesdites courroies (7) situé à proximité du poste de chauffage (18) et comportant des barres (13C) conçues pour presser les lots des produits (3) positionnés entre lesdites courroies (7).

12. Appareil selon la revendication 11, **caractérisé en ce qu'**il comprend un poste de refroidissement (20) comprenant des barres (13B) conçues pour évacuer la chaleur des courroies (7), le poste de refroidissement (20) étant intégré au poste de pressage (19).

13. Appareil selon la revendication 12, **caractérisé en ce que** les barres (13B) du poste de refroidissement (20) et les barres (13) du poste de pressage (19) sont alternées le long des courroies (7) dans des séquences préétablies adéquates.

14. Appareil selon les revendications 12 ou 13, **caractérisé en ce que** le poste de refroidissement (20) et le poste de pressage (19) intégrés l'un à l'autre comprennent une première section (21) à proximité du poste de chauffage (18) dans laquelle les barres de refroidissement (13B) s'alternent parfaitement avec les barres de pressage (13C), un second poste (22), éloigné du poste de chauffage (18), étant par contre équipé uniquement de barres de pressage (13C).
